# EUROPÄISCHE PATENTSCHRIFT

(11) **EP 0 614 695 B1**
(45) Veröffentlichungstag und Bekanntmachung des Hinweises auf die Patenterteilung: **15.09.1999**
(21) Anmeldenummer: 93810177.1
(22) Anmeldetag: 10.03.1993
(51) Int. Cl.: B01J 19/32

(54) **Geordnete Kolonnenpackung**
Ordered column packing
Garnissage de colonne ordonnée

(43) Veröffentlichungstag der Anmeldung: 14.09.1994
(73) Patentinhaber: Sulzer Chemtech AG, CH-8404 Winterthur (CH)
(72) Erfinder: Süess, Philipp, CH-8413 Neftenbach (CH)
(74) Vertreter: Heubeck, Bernhard

(56) Entgegenhaltungen:
- EP-A- 0 491 591
- GB-A- 1 012 933

## Beschreibung

Die Erfindung bezieht sich auf eine geordnete Kolonnenpackung gemäss dem Oberbegriff von Anspruch 1 sowie auf eine Stoffaustauschkolonne mit einer solchen Packung.

Die Packung setzt sich beispielsweise aus Schichten von wellenförmigen oder zickzackartig gefalteten Lamellen zusammen. Die Lamellen bestehen aus einem folienartigen Material (z.B. aus einem dünnen Blech oder einem Gewebe); die Faltkanten oder Kämme weisen eine gegen die Kolonnenachse geneigte Richtung auf, wobei der mit der Achse eingeschlossene Winkel beispielsweise 45° oder 30° beträgt. Die durch die Lamellen gebildeten Schichten sind parallel zur Achse ausgerichtet; sie sind bezüglich der Neigung der Faltkanten wechselweise angeordnet, sodass sich schräg laufende, offene und sich kreuzende Kanäle ergeben. Die Packung gliedert sich in Abschnitte, die sich durch die Orientierung der Schichtung unterscheiden. Die Orientierung wechselt zwischen benachbarten Abschnitten jeweils um 90°.

Weitere Beispiele von geordneten Packungen, die eine Verteilung der beiden Stoffströme über den Kolonnenquerschnitt bewirken, sind in den europäischen Patentschriften 0 070 917 und 0 069 241 beschrieben.

An den vertikalen Packungsrändern lenken die einen der alternierend angeordneten Schichten den über die Lamellen fliessenden Rieselfilm gegen die Lamellenkanten, was zu der Erscheinung einer randgängigen Flüssigkeit führt. Es ist bekannt, zwischen den Packungsabschnitten an der Kolonnenwand kranzartige Elemente vorzusehen, welche die randgängige Flüssigkeit solcherart umleiten, dass sie teilweise - über die nach innen lenkenden Schichten - wieder in das Packungsinnere zurückfliesst. Aus der US-PS 4 186 159 oder CH-PS 618 006 sind derartige Elemente in Form von Krägen bekannt, die auf verschiedenen Höhen der Packungsabschnitte angeordnet sein können.

Ein einzelner Packungsabschnitt der Stoffaustauschkolonne kann aus einem zusammenhängenden Einbauelement bestehen; er kann - insbesondere bei grossem Kolonnendurchmesser - auch aus mehreren Segmenten zusammengesetzt sein. Die Packung weist dabei oft auch im Innenbereich Trennflächen auf, die quer zu den Schichten laufen, nämlich Stossstellen zwischen benachbarten Segmenten. Diese Trennflächen unterbrechen die Kanäle und üben eine Randwirkung aus, aufgrund welcher auch an den Stossstellen randgängige Flüssigkeit entsteht.

Es sind für die Stossstellen keine Mittel zum Vermeiden oder Rückführen von randgängiger Flüssigkeit bekannt; und derartige Mittel für den Kolonnenrand - wie beispielsweise Krägen - weisen einen sehr beschränkten Wirkungsgrad auf. Aus der EP-A 0 491 591 ist eine Kolonne mit einer geordneten Packung bekannt, bei welcher Schichten der Packung derart ausgebildet sind, dass Flüssigkeit vom Packungsrand zurück in die Packung gelenkt wird.

Es ist Aufgabe der Erfindung, weitere Mittel zu schaffen, durch welche randgängige Flüssigkeit in die Packung beziehungsweise in die Packungssegmente wirkungsvoll rückführbar ist. Diese Aufgabe wird durch die in den unabhängigen Ansprüchen 1, 4, 6 und 7 definierten Kolonnenpackungen gelöst.

Die abhängigen Ansprüche 2, 3 und 5 betreffen vorteilhafte Ausführungsformen der erfindungsgemässen Packungen mit Rückführelementen. Anspruch 8 bezieht sich auf die Materialwahl und die Ansprüche 9 bis 11 betreffen die Stoffaustauschkolonne mit einer erfindungsgemässen Packung.

Nachfolgend wird die Erfindung anhand der Zeichnungen näher erläutert. Es zeigen:
- Fig. 1: einen Ausschnitt aus einer Packung in perspektivischer Ansicht (ohne Rückführelemente),
- Fig. 2: eine erste Ausführungsform des Rückführelements der erfindungsgemässen Packung,
- Fig. 3: einen Querschnitt durch einen Randbereich einer Kolonne mit Rückführelementen nach Fig.2,
- Fig. 4: einen Teil eines Kolonnenquerschnitts, mit Rückführelementen an Stossstellen zwischen Packungssegmenten,
- Fig. 5: eine gewellte Packungslamelle mit nutartiger Ausnehmung,
- Fig. 6: einen Packungsrand, der durch Falten der in Fig.5 gezeigten Lamelle hergestellt ist,
- Fig. 7: einen Teil eines Kolonnenquerschnitts, mit einer Packung, die durch mehrfache Faltung - entsprechend Fig.6 - hergestellt ist,
- Fig. 8: einen Packungsrand mit zackenförmigen Lappen als Rückführelemente und
- Fig. 9: einen Packungsrand mit drahtförmigen Rückführelementen.

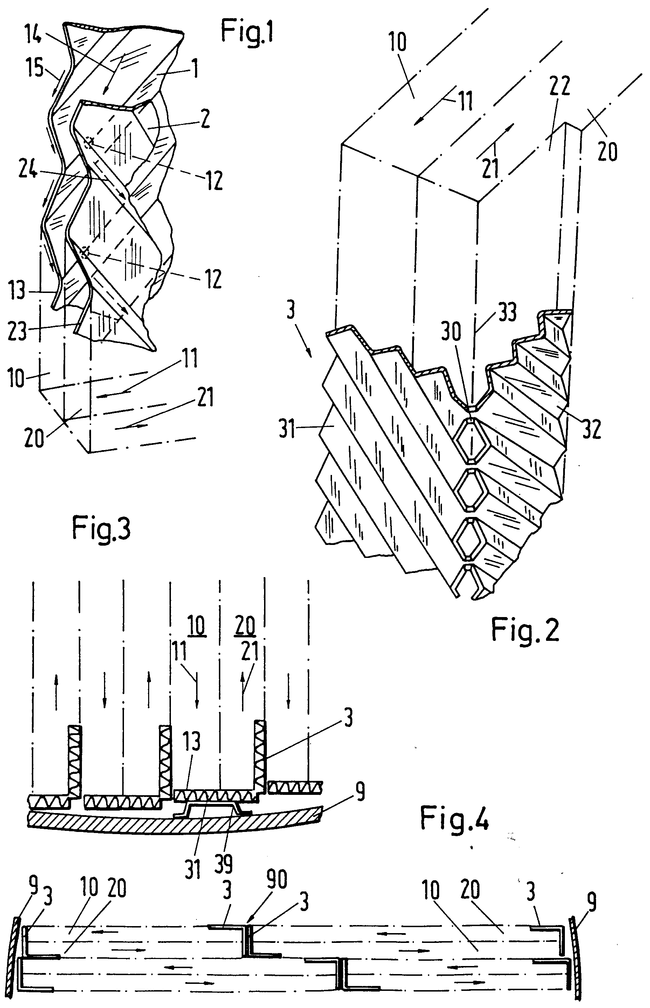

Der Packungsauschnitt in Fig.1 besteht aus den gewellten Lamellen 1 und 2, die sich in den Punkten 12 berühren. Auf der Lamelle 1 fliesst ein Rieselfilm 14, der an dem vertikalen Rand 13 in Form einer randgängigen Flüssigkeit 15 weiterfliesst. Die Lamelle 1 bildet die strichpunktiert angedeutete Schicht 10; mit dem Pfeil 11 ist die Richtung angegeben, in welche der Rieselfilm gelenkt wird. Sind Mittel vorhanden, die für einen Übertritt der randgängigen Flüssigkeit 15 auf die benachbarte Lamelle 2 sorgen, so wird die übertragene Flüssigkeit 24 durch die Schicht 20 vom Rand 23 weg wieder in den Innenbereich der Packung gelenkt (Pfeil 21).

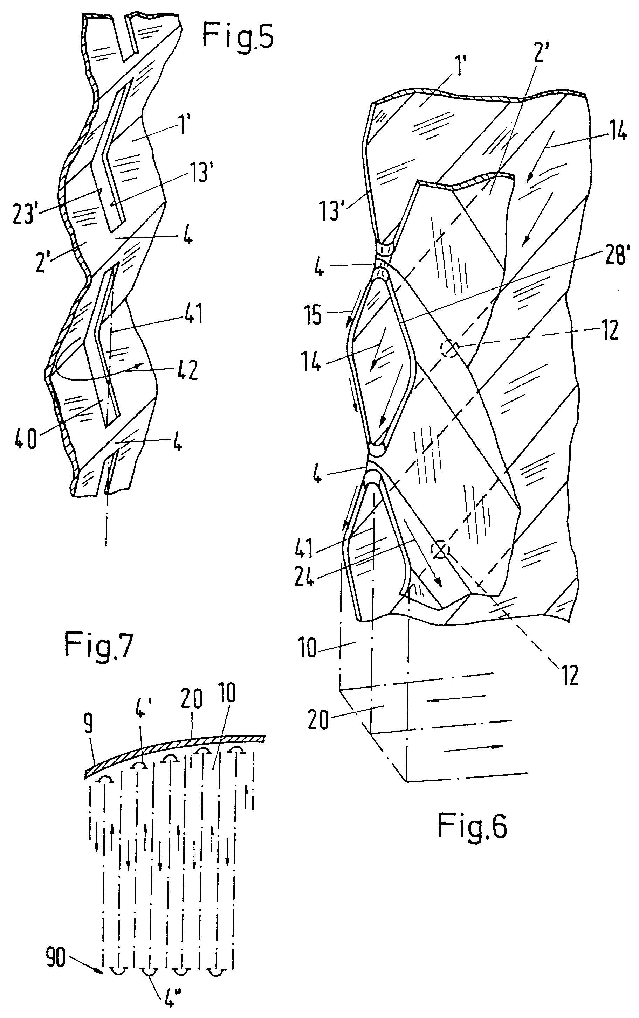

Das in Fig.2 dargestellte streifenförmige Rückführelement 3 besteht aus einem gewellten folienartigen Material. Es ist winkelig ausgebildet: die beiden Schenkel 31 und 32 schliessen bei der Scheitellinie 33 einen rechten Winkel ein. Der Schenkel 31 steht mit dem Rand der Packungsschicht 10, die die randgängige Flüssigkeit führt, in Kontakt. Der Schenkel 32, der in Richtung der Schichtebene weist, berührt die Schicht 20 seitlich. In dieser Schicht 20 ist eine Ausnehmung 22 für den Schenkel 32 vorgesehen. Die beiden Schenkel sind beim vorliegenden Ausführungsbeispiel durch brückenartige Verbindungsstücke 30 verbunden, die eine flüssigkeitsleitende Überbrückung darstellen. Dieses Rückführungselement 3 lässt sich auf eine entsprechende Weise herstellen, wie es weiter unten im Zusammenhang mit den Figuren 5 und 6 erläutert wird.

Bei einem erfolgreich durchgeführten Versuch waren für die geometrischen Masse folgende Werte gewählt worden: Wellenlänge der Packung = 25 mm, Schichtbreite = 25 mm; Wellenlänge des Rückführelements 3 = 7,5 mm, Tiefe der Wellen = 3 mm, Länge des Schenkels 31 = 25 mm, Länge des Schenkels 32 = 30 mm und Neigung der Wellenkämme = 25°. Die Beschickungsgeschwindigkeit war rund 60 m/h (m³/m²h).

Eine grosse Wirkung des Rückführelements erzielt man, wenn man den Rückführelementen eine relativ feine Profilierung gibt: Wellenlänge rund 1 mm, Tiefe der Wellen rund 0,5 mm. Für die Neigung der Wellenkämme ist praktisch jeder Werte möglich, der grösser als 0° und kleiner als rund 60° ist; vorzugsweise wählt man einen Winkel kleiner als 45°.

Fig.3 zeigt eine Anordnung von Packungsschichten 10, 20 mit zugeordneten Rückführelementen 3 bei der Kolonnenwand 9. Mittels Federelementen 39 zwischen Packung und Kolonnenwand lässt sich beispielsweise das Rückführelement 3 an den Rand 13 der Schicht 10 andrücken. Die Rückführelemente 3 können aber auch mittels Schweiss-, Schraub- oder Nietverbindungen an der Packung befestigt sein. Fig.4 zeigt neben Rückführelementen 3 am Kolonnenrand zusätzlich solche Elemente 3, die sich an Stossstellen 90 zwischen Packungssegmenten im Innenbereich der Packung befinden.

Es ist von Vorteil, wenn der Schenkel 31 etwas kürzer als die Breite der Schicht 10 ist. Dann besteht für einen Gasstrom, der sich zwischen der Kolonnenwand 9 und der Packung bewegt, keine wesentlich Behinderung in Bezug auf ein mögliches Rückströmen in das Packungsinnere.

In Fig.5 ist ausschnittsweise eine gewellte Folie dargestellt, die durch eine nutartige Ausnehmung 40 in zwei Teile 1' und 2' unterteilt ist. Die beiden Teile sind an den Stellen 4 brückenartig verbunden. Durch Falten um die Achse 41 gemäss Pfeil 42 erhält man die zweischichtige Struktur der Fig.6 (oder entsprechend das in Fig.2 gezeigte Rückführelement 3). Es wird um 180° gefaltet, sodass sich die beiden Teile 1' und 2' in den Punkten 12 berühren. (Bei der entsprechenden Herstellung des Rückführelements 3 wird selbstverständlich lediglich um 90° gefaltet.)

Bei dem in Fig.6 gezeigten Schichtpaar 10, 20 sind die Rückführelemente in Form von Verbindungen 4 ausgebildet, die zwischen den Rändern 13' und 23' der Lamellen 1' bzw. 2' feste Überbrückungen herstellen. Die randgängige Flüssigkeit 15 des Rieselfilms 14 wird durch diese Rückführelemente 4 wieder zurück in die Packung geleitet (Pfeil 24).

Für eine gute Rückführung der randgängigen Flüssigkeit 15 ist es wichtig, dass die Verbindungen 4 möglichst breit sind. Deshalb soll die Ausnehmung 40 (Fig.5) nur gerade so tief sein, als es für das Umfalten nötig ist.

Nach der Faltmethode der Fig.5 lässt sich auch eine Vielzahl von Lamellenstücken zu einem mehrschichtigen Packungssegment zusammenfalten. Dies ist anhand der Fig.7 illustriert. Mit den Bögen 4' (bei der Kolonnenwand 9) und 4'' (bei einer Stossstelle 90) sind Rückführelemente 4 gemäss Fig.6 symbolisiert.

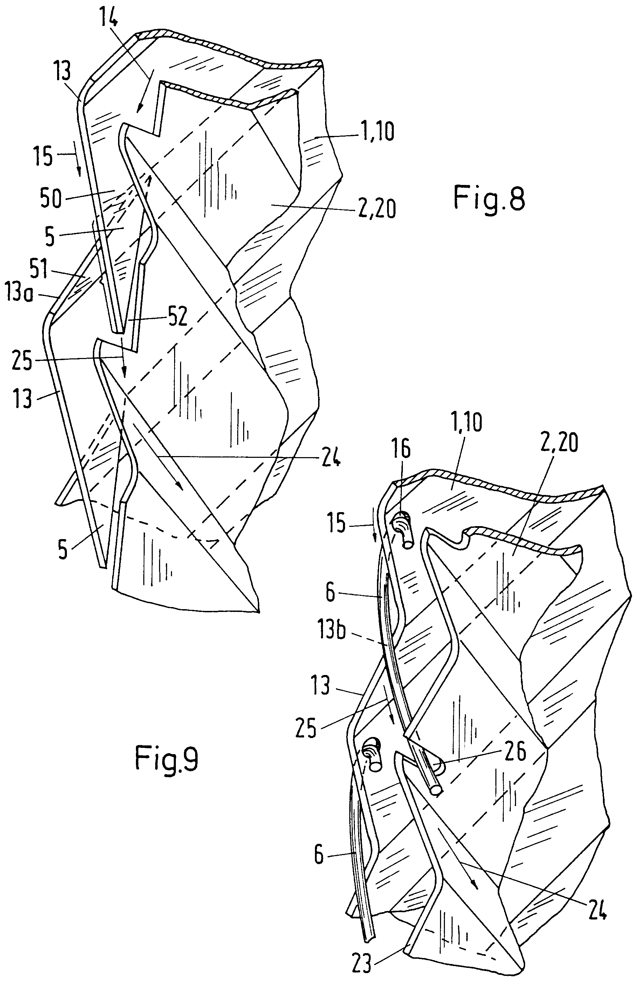

Fig.8 stellt ausschnittsweise den Randbereich eines Lamellenpaars 1, 2 dar, bei dem die Rückführelemente am Rand der Schicht 10, die die randgängige Flüssigkeit 15 führt, in Form von zackenförmigen Lappen 5 ausgebildet sind. Diese Lappen 5 ergeben sich durch schräges Einschneiden an der Kante 13 der Lamelle 1 (Schnittkante 13a) und Rückfalten des durch eine geschweifte Klammer 51 angegebenen Stücks um die Linie 50. Am Rand der Lamelle 2 sind Ausnehmungen 25 für die zackenförmigen Lappen 5 vorgesehen, sodass die randgängige Flüssigkeit 25 unbehindert in die Nachbarschicht 20 übertreten kann (Pfeil 24).

Bei der Ausführungsform der Fig.9 bestehen die Rückführelemente aus Drahtstücken 6. Diese drahtförmigen Rückführelemente 6 weisen einerseits ein hakenförmiges Ende auf, mit dem sie in Löchern 16 der Lamelle 1 eingehängt werden können; andererseits sind sie solcherart geformt, dass sie die Lamellenkante 13 berühren (Punkt 136). Am Rand 23 der Lamelle 2 sind nutförmige Ausnehmungen 26 für die unteren Ende der Drahtstücke 6 vorgesehen. Beim Punkt 136 wird die randgängige Flüssigkeit 15 von der Schicht 10 zur und in die zugeordneten Nachbarschicht 20 umgeleitet (Pfeile 25, 24). Falls die Rückführkapazität der Drahtstücke 6 zu gering ist, können anstelle eines einzelnen Drahtstücks pro Wellenlänge auch zwei oder mehr vorgesehen werden.

## Patentansprüche

1. Geordnete Kolonnenpackung für den Stoffaustausch zwischen einem Rieselfilm (14) und einem Gas, mit alternierend angeordneten Schichten (10, 20), wobei die einen Schichten (10) den Rieselfilm gegen einen vertikalen Rand (13) der Schichten lenken und die anderen Schichten (20) den Rieselfilm weg vom Rand lenken, wobei die Schichten jeweils paarweise durch Rückführelemente (3) gekoppelt sind und diese Rückführelemente eine flüssigkeitsleitende Überbrückung darstellen, durch welche randgängige Flüssigkeit (15) der einen Schicht (10) zumindest teilweise auf die zugeordnete Nachbarschicht (20) übertragbar ist,
dadurch gekennzeichnet, dass die Rückführelemente (3) jeweils in Form eines Streifens vorgesehen sind, der winkelig mit einer vertikalen Scheitellinie (30) ausgebildet ist und der aus einem gewellten folienartigen Material besteht, wobei die Packungsschicht (10), die die randgängige Flüssigkeit (15) führt, in Kontakt mit dem einen Schenkel (31) des Rückführelements steht und die andere Schicht (20) den zweiten Schenkel (32) entlang der Schichtebene berührt.

2. Kolonnenpackung nach Anspruch 1, dadurch gekennzeichnet, dass das gewellte folienartige Material eine Profilierung aufweist, für welche die Wellenlänge zwischen rund 1 und 10 mm und die Tiefe der Wellen zwischen rund 0,5 und 5 mm ist, und dass die Neigung der Wellenkämme der Rückführelemente (3) grösser als 0° und kleiner als 45° ist.

3. Kolonnenpackung nach Anspruch 1 oder 2, dadurch gekennzeichnet, dass für den zweiten Schenkel (32) des Rückführelements (3) eine Ausnehmung (22) in der zugeordneten Packungsschicht (20) vorgesehen ist.

4. Geordnete Kolonnenpackung für den Stoffaustausch zwischen einem Rieselfilm (14) und einem Gas, mit alternierend angeordneten Schichten (10, 20), wobei die einen Schichten (10) den Rieselfilm gegen einen vertikalen Rand (13) der Schichten lenken und die anderen Schichten (20) den Rieselfilm weg vom Rand lenken, wobei die Schichten jeweils paarweise durch Rückführelemente (3) gekoppelt sind und diese Rückführelemente eine flüssigkeitsleitende Überbrückung darstellen, durch welche randgängige Flüssigkeit (15) der einen Schicht (10) zumindest teilweise auf die zugeordnete Nachbarschicht (20) übertragbar ist,
dadurch gekennzeichnet, dass die Rückführelemente (3) in Form von Verbindungen (4) ausgebildet sind, die zwischen den Rändern (13', 23') jeweils eines Schichtpaars (1', 2') feste Überbrückungen herstellen.

5. Kolonnenpackung nach Anspruch 4, dadurch gekennzeichnet, dass zumindest Teile der Packung aus gewelltem folienartigem Material durch Falten um vertikale nutartige Ausnehmungen (40) hergestellt sind, wobei aufgrund der nutartigen Ausnehmungen Stege (4) ausgebildet sind, die als Rückführelemente wirken.

6. Geordnete Kolonnenpackung für den Stoffaustausch zwischen einem Rieselfilm (14) und einem Gas, mit alternierend angeordneten Schichten (10, 20), wobei die einen Schichten (10) den Rieselfilm gegen einen vertikalen Rand (13) der Schichten lenken und die anderen Schichten (20) den Rieselfilm weg vom Rand lenken, wobei die Schichten jeweils paarweise durch Rückführelemente (3) gekoppelt sind und diese Rückführelemente eine flüssigkeitsleitende Überbrückung darstellen, durch welche randgängige Flüssigkeit (15) der einen Schicht (10) zumindest teilweise auf die zugeordnete Nachbarschicht (20) übertragbar ist,
dadurch gekennzeichnet, dass die Rückführelemente am Rand (13) der Schicht (10), die die randgängige Flüssigkeit (15) führt, in Form von zackenförmigen Lappen (51) ausgebildet sind, welche die randgängige Flüssigkeit in den Bereich der zugeordneten Nachbarschicht (20) leiten, wobei am Rand der Nachbarschicht Ausnehmungen (52) für die zackenförmigen Lappen vorgesehen sind.

7. Geordnete Kolonnenpackung für den Stoffaustausch zwischen einem Rieselfilm (14) und einem Gas, mit alternierend angeordneten Schichten (10, 20), wobei die einen Schichten (10) den Rieselfilm gegen einen vertikalen Rand (13) der Schichten lenken und die anderen Schichten (20) den Rieselfilm weg vom Rand lenken, wobei die Schichten jeweils paarweise durch Rückführelemente (3) gekoppelt sind und diese Rückführelemente eine flüssigkeitsleitende Überbrückung darstellen, durch welche randgängige Flüssigkeit (15) der einen Schicht (10) zumindest teilweise auf die zugeordnete Nachbarschicht (20) übertragbar ist,
dadurch gekennzeichnet, dass die Rückführelemente als Drahtstücke (6) ausgebildet sind, welche die Schicht (10) mit der randgängigen Flüssigkeit (15) am Rand (13, 136) berühren und welche die randgängige Flüssigkeit in den Bereich der zugeordneten Nachbarschicht (20) leiten, wobei am Rand (23) der Nachbarschicht Ausnehmungen für die Drahtstücke vorgesehen sind.

8. Kolonnenpackung nach einem der Ansprüche 1 bis 7, dadurch gekennzeichnet, dass die Rückführelemente (3) im wesentlichen aus dem gleichen Material wie die Packungsschichten, insbesondere aus einer metallischen Legierung oder einem Kunststoff, hergestellt sind.

9. Stoffaustauschkolonne mit einer Packung nach einem der Ansprüche 1 bis 8, dadurch gekennzeichnet, dass zumindest zu einem Teil die Rückführelemente (3) für die Schichtränder (13), die den äusseren Kolonnenrand bilden, vorgesehen sind.

10. Stoffaustauschkolonne mit einer Packung nach einem der Ansprüche 1 bis 8, dadurch gekennzeichnet, dass zumindest zu einem Teil die Rückführelemente (3) für Stossstellen (90) zwischen benachbarten Packungssegmenten im Kolonneninneren vorgesehen sind.

11. Stoffaustauschkolonne nach Anspruch 9 mit einer Packung nach einem der Ansprüche 1 bis 3, dadurch gekennzeichnet, dass Federelemente (39) zwischen der Kolonnenwand (9) und den Rückführelementen (3) vorgesehen sind, zwecks Anpressens des einen Schenkels (31) an den Rand (13) der Schicht (10) mit der randgängigen Flüssigkeit (15).

## Claims

1. An orderly packing for a column for mass transfer between a trickling film (14) and a gas, with alternately arranged layers (10, 20) where some of the layers (10) steer the trickling film towards one vertical edge (13) of the layers and the other layers (20) steer the trickling film away from the edge, the layers being are coupled in pairs through redirector elements (3) and these redirector elements forming a liquid-conducting bridging-over by which edge-seeking liquid (15) on the one layer (10) may be transferred at least partially to the associated neighbouring layer (20), characterized in that
the redirector elements (3) are designed each in the form of a strip which is formed at an angle by a vertical line and consists of a corrugated foil like material so that that layer (10) of the packing which is guiding the edge-seeking liquid (15) is in contact with the one arm (31) of the redirector element and the other layer (20) touches the second arm (32) along the plane of the layer.

2. A column packing as in Claim 1, characterized in that
the corrugated foillike material exhibits a profiling for which the wavelength is between about 1 and 10 mm and the depth of the waves between about 0,5 and 5 mm, and that the inclination of the wavecrests of the redirector ele-ments (3) is greater than 0° and less than 45°.

3. A column packing as in Claim 1 or 2, characterized in that
for the second arm (32) of the redirector element (3) a recess (22) is provided in the associated layer (20) of the packing.

4. An orderly packing for a column for mass transfer between a trickling film (14) and a gas, with alternately arranged layers (10, 20) where some of the layers (10) steer the trickling film towards one vertical edge (13) of the layers and the other layers (20) steer the trickling film away from the edge, the layers being are coupled in pairs through redirector elements (3) and these redirector elements forming a liquid-conducting bridging-over by which edge-seeking liquid (15) on the one layer (10) may be transferred at least partially to the associated neighbouring layer (20), characterized in that
the redirector elements (3) are made in the form of connections (4) which produce between the edges (13', 23') of respective pairs (1', 2') of layers solid bridgings-over.

5. A column packing as in Claim 4, characterized in that
at least parts of the packing are produced from corrugated foillike material by folding about vertical groovelike recesses (40), so that at the base of the groovelike recesses webs (4) are formed which act as redirector elements.

6. An orderly packing for a column for mass transfer between a trickling film (14) and a gas, with alternately arranged layers (10, 20) where some of the layers (10) steer the trickling film towards one vertical edge (13) of the layers and the other layers (20) steer the trickling film away from the edge, the layers being are coupled in pairs through redirector elements (3) and these redirector elements forming a liquid-conducting bridging-over by which edge-seeking liquid (15) on the one layer (10) may be transferred at least partially to the associated neighbouring layer (20), characterized in that
at the edge (13) of the layer (10) which is carrying the edge-seeking liquid (15) the redirector elements are made in the form of jagged lobes (51) which conduct the edge-seeking liquid into the region of the associated neighbouring layer (20), recesses (52) being provided at the edge of the neighbouring layer for the jagged lobes.

7. An orderly packing for a column for mass transfer between a trickling film (14) and a gas, with alternately arranged layers (10, 20) where same of the layers (10) steer the trickling film towards one vertical edge (13) of the layers and the other layers (20) steer the trickling film away from the edge, the layers being are coupled in pairs through redirector elements (3) and these redirector elements forming a liquid-conducting bridging-over by which edge-seeking liquid (15) an the one layer (10) may be transferred at least partially to the associated neighbouring layer (20), characterized in that
the redirector elements are made as pieces (6) of wire which touch at the edge (13, 136) the layer (10) with the edge-seeking liquid (15) and conduct the edge-seeking liquid into the region of the associated neighbouring layer (20), recesses being provided at the edge (23) of the neighbouring layer for the pieces of wire.

8. A column packing as in one of the Claims 1 to 7, characterized in that
the redirector elements (3) are produced essentially from the same material as the layers of the packing, in particular of a metallic alloy or plastics.

9. A mass transfer column having a packing as in one of the Claims 1 to 8, characterized in that
at least some of the redirector elements (3) are provided for those edges (13) of the layers which form the outer edge of the column.

10. A mass transfer column having a packing as in one of the Claims 1 to 8, characterized in that
at least some of the redirector elements (3) are provided for intersections (90) between adjacent segments of the packing inside the column.

11. A mass transfer column as in Claim 9 having a packing as in one of the Claims 1 to 3, characterized in that
spring elements (39) are provided between the wall (9) of the column and the redirector elements (3) for the purpose of pressing the one arm (31) against the edge (13) of the layer (10) with the edge-seeking liquid (15).

## Revendications

1. Garnissage de colonne ordonnée pour l'échange de matière entre un film ruisselant (14) et un gaz, avec des couches (10, 20) disposées en alternance, où les couches précitées (10) guident le film ruisselant contre un bord vertical (13) des couches et où les autres couches (20) guident le film ruisselant au loin du bord, les couches étant accouplées respectivement par paires par des éléments de retour (3), et ces éléments de retour constituent un pont guidant le liquide par lequel du liquide (15) dirigé sur le bord d'une couche (10) peut être transféré au moins partiellement à la couche avoisinante associée (20), caractérisé en ce que les éléments de retour (3) sont prévus respectivement sous la forme d'une bande qui est réalisée angulairement avec une ligne de crête verticale (30) et qui est constituée d'un matériau ondulé en forme de feuille, où la couche de garnissage (10) qui guide le liquide (15) dirigé sur le bord est en contact avec l'une des branches (31) de l'élément de retour, et l'autre couche (20) vient en contact avec la deuxième branche (32) le long du plan de couche.

2. Garnissage de colonne selon la revendication 1, caractérisé en ce que le matériau en forme de feuille ondulée présente un profilage pour lequel la longueur d'onde est comprise entre environ 1 et 10 mm et la profondeur des ondes entre environ 0,5 et 5 mm, et en ce que l'inclinaison des crêtes d'onde des éléments de retour (3) est plus grand que 0° et plus petit que 45°.

3. Garnissage de colonne selon la revendication 1 ou 2, caractérisé en ce qu'il est prévu pour la deuxième branche (32) de l'élément de retour (3) un évidement (22) dans la couche de garnissage associée (20).

4. Garnissage de colonne ordonnée pour' l'échange de matière entre un film ruisselant (14) et un gaz, avec des couches (10, 20) disposées en alternance, où les couches (10) guident le film ruisselant contre un bord vertical (13) des couches et les autres couches (20) guident le film ruisselant au loin du bord, les couches étant accouplées respectivement par paires par des éléments de retour (3) et ces éléments de retour constituent un pont guidant le liquide par lequel du liquide (15) dirigé sur le bord d'une couche (10) peut être transféré au moins partiellement à la couche avoisinante associée (20), caractérisé en ce que les éléments de retour (3) sont réalisés sous la forme de liaisons (4) qui établissent entre les bords (13', 23') respectivement d'une paire de couches (1', 2') des ponts fixes.

5. Garnissage de colonne selon la revendication 4, caractérisé en ce qu'au moins des parties du garnissage sont réalisées à partir d'un matériau ondulé en forme de feuille par un plage autour d'évidements verticaux en forme de rainure (40) où, en raison des évidements en forme de rainure, des nervures (4) sont réalisées qui agissent comme éléments de retour.

6. Garnissage de colonne ordonnée pour l'échange de matière entre un film ruisselant (14) et un gaz, avec des couches (10, 20) disposées en alternance, où les couches (10) guident le film ruisselant contre un bord vertical (13) des couches et les autres couches (20) guident le film ruisselant au loin du bord, les couches étant accouplées respectivement par paires par des éléments de retour (3), et ces éléments de retour constituent un pont guidant le liquide par lequel du liquide (15) dirigé sur le bord d'une couche (10) peut être transféré au moins partiellement à la couche avoisinante associée (20), caractérisé en ce que les éléments de retour sont réalisés au bord (13) de la couche (10) qui guide le liquide (15) dirigé sur le bord, sous la forme de languettes (51) en forme de dents qui guident le liquide dirigé sur le bord dans la zone de la couche avoisinante associée (20), où sont prévus au bord de la couche avoisinante des évidements (52) pour les languettes en forme de dent.

7. Garnissage de colonne ordonnée pour l'échange de matière entre un film ruisselant (14) et un gaz, avec des couches (10, 20) disposées en alternance, où les couches (10) guident le film ruisselant contre un bord vertical (13) des couches et les autres couches (20) guident le film ruisselant au loin du bord, les couches étant accouplées respectivement par paires par des éléments de retour (3), et ces éléments de retour constituent un pont guidant le liquide, par lequel du liquide (15) dirigé sur le bord d'une couche (10) peut être transféré au moins partiellement à la couche avoisinante associée (20), caractérisé en ce que les éléments de retour sont réalisés sous forme de pièces de fil (6) qui viennent en contact avec la couche (10), avec le liquide (15) dirigé sur le bord, au bord (13, 136) et qui guident le liquide dirigé sur le bord dans la zone de la couche avoisinante associée (20), où sont prévus au bord (23) de la couche avoisinante des évidements pour les pièces de fil.

8. Garnissage de colonne selon l'une des revendications 1 à 7, caractérisé en ce que les éléments de retour (3) sont réalisés essentiellement dans le même matériau que les couches de garnissage, notamment en un alliage métallique ou une matière synthétique.

9. Colonne d'échange de matière avec un garnissage selon l'une des revendications 1 à 8, caractérisée en ce qu'au moins en partie, les éléments de retour (3) sont prévus pour les bords de couche (13) qui forment le bord de colonne extérieur.

10. Colonne d'échange de matière avec un garnissage selon l'une des revendications 1 à 8, caractérisée en ce qu'au moins en partie, les éléments de retour (3) sont prévus pour les emplacements de joint (90) entre des segments de garnissage avoisinants dans l'intérieur de la colonne.

11. Colonne d'échange de matière selon la revendication 9 avec un garnissage selon l'une des revendications 1 à 3, caractérisée en ce que des éléments élastiques (39) sont prévus entre la paroi de colonne (9) et les éléments de retour (3), en vue de l'application d'une branche (31) au bord (13) de la couche (10) avec le liquide (15) dirigé sur le bord.
